# EUROPEAN PATENT APPLICATION

(11) **EP 4 300 638 A1**
(43) Date of publication of application: **03.01.2024**
(21) Application number: 22020307.9
(22) Date of filing: 29.06.2022
(51) Int. Cl.: H01M 6/04, H01M 6/14, H01M 6/16, H01M 6/26, H01M 14/00

(54) **GRAVITATIONAL UNREACTIVE GALVANIC BATTERY CELL**

(71) Applicant: CERAGOS Electronics & Nature, 06800 Cagnes-sur-Mer (FR)
(72) Inventor: CERASANI, Umberto, 06800 Cagnes-sur-Mer (FR)

(57) **Abstract**

[A01] A battery cell is disclosed comprising an insulating case filled in with an electrolyte and two conductive electrodes configured to be positioned at different height.

[A02] A battery cell which electrostatic potential arises from the equilibrium between diffusional and gravitational forces.

[A03] It is an object of this invention to use unreactive electrolyte and then avoid redox reaction on electrodes (in opposition to concentration cells).

[A04] A new set of electrolytes maximizing the difference of anions and cations coefficient of diffusion and mass, such as Magnesium Sulfate salt/electrolyte (MgSO₄) and more complex electrolytes such as long-chain acids, can be used.

[A05] Several conductive or semi-conductive materials can be used for electrodes provided no redox chemical reaction occurs with the electrolyte.

## Description

### 1) Prior art:

[D01] After the voltaic cell was invented by Alessandro Volta in the early beginning of the 19th century, the Daniell cell, invented in 1836 by British chemist John Frederic Daniell, was the first practical source of electricity, becoming an industry standard. It was made of two electrolyte with different density (CuSO4 for the anode and ZnSO4/H2SO4 for the cathode). This type of cell did not support shaking to avoid mixing of electrolytes. It was used for powering telegraph circuits up to recently.

[D02] Lithium batteries were first proposed by British chemist M. Stanley in the 1970s. In 1991, Sony commercialized its first rechargeable lithium ion batteries combining a LiCoO2 cathode with a graphite anode, also known as a "rocking chair" device [1] [2].

[D03] Besides the use of other ionic elements rather than lithium ions have been also proposed to increase battery capacity. Since magnesium ions are capable of transferring two electrons in contrast to the single electron transported by lithium, rechargeable batteries using a magnesium based electrolyte have been created. In [3], an electrochemical cell comprising a cathode made of metal oxide, an anode realized with magnesium, conductive materials and a binder, and an electrolyte layer composed of a non-organic solvent, a salt and active magnesium ions is proposed. In [3], magnesium ions replace lithium ions in both the electrolyte solution and in the anode, leading to a higher capacity rechargeable battery than conventional Li-ions batteries.

[D04] For applications requiring many charges/discharges cycle and fast energy delivery (e.g. telecommunication systems, uninterruptible power sources, hybrid electric vehicles for instance), supercapacitors have emerged as a promising solution. Unlike ordinary capacitors, supercapacitors do not use the conventional solid dielectric, but rather use electrostatic double-layer capacitance and electrochemical pseudocapacitance, both contributing to the total capacitance of the capacitor. A separator is inserted between the two capacitor plates with a "fuse" function, to prevent electrical short-circuits leading to overheating and over potential.

[D05] Although Li-batteries and supercapacitors strongly dominate the battery cell industry, emerging technologies based on different physical principles other than electrochemical reactions and faradaic processes have been developed and are currently under improvement. Studies on cells based on the Soret's effect that generates an electric potential when the opposite sides of an electrolyte are maintained at a different temperature, are currently being developed [4] [5] [6].

[D06] Concentration cells did not have broad commercial application failing in the field of commercial batteries. The use of concentration cell is gaining interest due to its possibility to be reconditioned by a thermal process. Several US patents have been issued and the most recent one [7] is dated July 17^{th}, 2003. Document [7] presents in figure 3B a concentration cell using the gravitational force to avoid the presence of a "screen" and takes advantage of gradients or concentration inhomogeneities appearing when a solid electrolyte dissolves in a solvent. Such embodiment is based on redox reactions at electrodes and then the voltage is essentially given by the Nernst's equation. This embodiment can be thermally reconditioned for repeated generation of electricity.

### Citation list:

[1] S. Huang, L. Kavan, I. Exnar, and M. Grätzel. Rocking chair lithium battery based on (Alameda, CA (US) Brevet n° US 2003/0134160 A1, 2003)nanocrystalline TiO2 (anatase). Journal of the Electrochemical Society. 1995, vol. 142, p. L142-L144.
[2] B. Scrosati. History of lithium batteries. Journal of solid state electrochemistry. 2011, vol. 15, p. 1623-1630.
[3] W. Song, T. S. Arthur, C. Bucur, M. Matsui, J. Muldoon, N. Singh, et al., "High voltage rechargeable magnesium cell," US2013/004830 A1.
[4] A. Latz and J. Zausch. Thermodynamic consistent transport theory of Li-ion batteries. Journal of Power Sources. 2011, vol. 196, p. 3296-3302.
[5] A. Latz and J. Zausch. Multiscale modeling of lithium ion batteries: thermal aspects. Beilstein journal of nanotechnology. 2015, vol. 6, p. 987.
[6] P. S. Reddy and A. J. Chamkha. Soret and Dufour effects on MHD convective flow of Al2O3-water and TiO2-water nanofluids past a stretching sheet in porous media with heat generation/absorption. Advanced Powder Technology. 2016, vol. 27, p. 1207-1218.
[7] Norman K. Borsuk, Alameda, CA (US) Patent Number: US 2003/0134160 A1: CONCENTRATION CELLS UTILIZING EXTERNAL FIELDS

### Best description of the drawings:

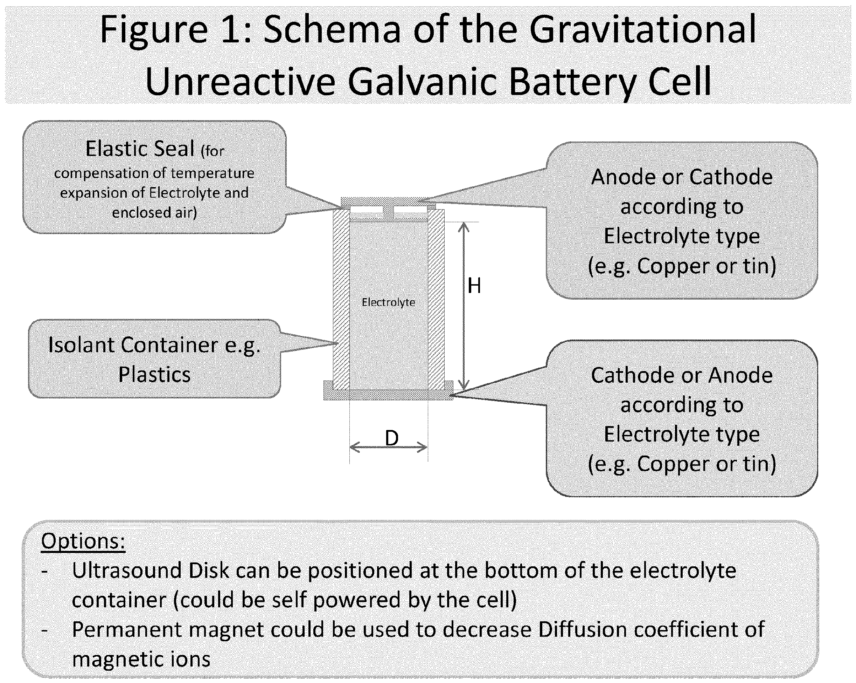

[D07] Fig. 1. is a schematic view of the battery cell subassembly. According to the embodiment presented in Fig. 1, this subassembly includes an electrical insulator (1), comprising an elastic seal (2) at one end, two electrodes (3, 4) preferentially made of the same conducting metal and an electrolyte (5).

### Description of the embodiments:

[D08] It is an object of the invention to provide a battery cell in which the electrostatic potential primarily arises from the different diffusion coefficient and mass of anions and cations contained in the electrolyte.
Electrolyte dissolution in solvent generates separation of free moving anions and cations having different diffusion coefficient and mass. These anions and cations undergo a spatial repartition inside the electrolyte mainly due to opposing gravitational force (that concentrates free moving ions at the bottom of the container) and diffusion force (that drives free moving ions upward to compensate the effects of the gravitational force). At equilibrium, an electrostatic force appears between the top and bottom of the electrolyte solution that is collected at top and bottom electrodes.

[D09] In a preferred embodiment of the present invention, a container 1 made of electrical insulator material is filled with an electrolytic solution 5. The container is composed of elastic seals 2 at one end. The container can compensate for thermal expansion of the electrolyte (including enclosed air).

[D10] In a preferred embodiment of the present invention, an electrode 3 (the anode or the cathode according to electrolyte type) is positioned at the top of the container in contact with the electrolyte 5 and another electrode 4 (the cathode or anode respectively) is positioned at the bottom of the container, also in contact with the electrolyte. Both electrodes are made of conductive material and can be made of the same material. Both electrodes are fixed to the container using an elastic seal to compensate for thermal expansion of electrolyte.

[D11] Electrodes made of a conductive or semi-conductive material and Electrolyte should be chosen to avoid a chemical reaction between them. One example is to use Copper electrodes and Magnesium Sulfate salt/electrolyte(MgSO₄)

[D12] Examples of conductive materials used for electrodes include copper, iron and noble metals. Less reactive metal should be preferred to allow a wider choice of unreactive electrolytes. Semi-conducting materials can be used too provided they are implemented as a thin coating layer over a conductive material.

[D13] According to a preferred embodiment of the present invention, the electrolyte solution 5 is composed of anions and cations and are chosen to maximize the difference of their diffusion coefficients and masses when solvated. Examples of simple electrolyte solutions are Ammonium Selenate (NH₄)₂(SeO₄), Ammonium Sulfate (NH₄)₂(SO₄), Copper Chloride: CuCl₂, Iron Perchlorate: Fe(ClO₄)₂, Magnesium Sulfate: MgSO₄, Magnesium Chlorate: Mg(ClO>₃)₂, Sodium Ferrocyanide: Na₄Fe(CN)₆, Potassium FerriCyanide K₃Fe(CN)₆, Magnesium Selenate Mg(SeO₄) ), Potassium Selenate K₂Se(O)₆, Tin Chloride: SnCl₂ solvated in pure water.

[D14] In another embodiment of the present invention, organic solutions with high conductivity and capable of being dissolved into ions with elevated molecular masses difference are used as an electrolyte such as polyelectrolytes and long chain electrolytes (acids, bases and salts).

[D15] In another embodiment of the present invention, several electrolytes can be combined to maximize both the electrostatic force and the current that can be given out e.g. one electrolyte maximizing the difference of weights and coefficients of diffusion and the additional one maximizing the solvability.

[D16] In another embodiment of the present invention, acidic or basic solutions can be used as electrolyte solutions, provided they do not react with electrodes material.

[D17] In another embodiment of the present invention, an ultrasound emitter is placed on the bottom of the container to avoid settlement of the insoluble electrolyte part. Ultrasound emitter can be powered by the cell itself.

[D18] The battery according to claim 1, further including a magnetizing device positioned in a way to decrease the diffusion speed of the electrolyte ions, such as two external semi-cylindrical permanent magnets placed around the cell case generating an horizontal magnetic field.

## Claims

1. A battery cell is disclosed including:
- an insulating case,
- two electrodes made of metal or semi-conductor with low chemical reactivity, possibly made of the same material, positioned in contact with the electrolyte at two different height positions, and,
- an electrolyte solution positioned between the electrodes that does not react with electrodes (in opposition to concentration cells).
Said battery cell is further **characterized in that** it does not require an electric current to be recharged.

2. The battery according to claim 1, wherein the insulating case is configured to undergo deformation at the sealing level and to accommodate thermal expansion of the other components.

3. Examples of conductive materials used for electrodes include copper, iron and noble metals. Less reactive metal should be preferred to allow a wider choice of unreactive electrolytes. Semi-conducting materials can be used too provided they are implemented as a thin coating layer over a conductive material.

4. According to a preferred embodiment of the present invention, the electrolyte solution split into anions and cations and chosen to maximize the difference of diffusion coefficients and masses when solvated. Examples of simple electrolyte solutions are Ammonium Selenate (NH₄)₂(SeO₄), Ammonium Sulfate (NH₄)₂(SO₄), Copper Chloride: CuCl₂, Iron Perchlorate: Fe(ClO₄)₂, Magnesium Sulfate: MgSO₄, Magnesium Chlorate: Mg(ClO₃)₂, Sodium Ferrocyanide: Na₄Fe(CN)₆, Potassium FerriCyanide K₃Fe(CN)₆, Magnesium Selenate Mg(SeO₄) ), Potassium Selenate K₂Se(O)₆, Tin Chloride: SnCl₂ solvated in pure water.

5. In another embodiment of the present invention, organic solutions with high conductivity and capable of being dissolved into ions with elevated molecular masses difference are used as an electrolyte such as polyelectrolytes and long chain electrolytes (acids, bases and salts).

6. In another embodiment of the present invention, several electrolytes can be combined to maximize both the electrostatic force and the current that can be given out e.g. one electrolyte maximizing the difference of weights and coefficients of diffusion and the additional one maximizing the solvability.

7. The battery according to claim 1, further including an ultrasonic emitter at the battery bottom and intermittently and directly powered by the battery cell itself. The goal of Ultrasound waves is to avoid settlement of the insoluble electrolyte part.

8. In another embodiment of the present invention, a magnetizing device such as a magnet is positioned in a way to decrease the diffusion speed of anions or cations.
